**Europäisches Patentamt**

**European Patent Office**

**Office européen des brevets**

(19)

(11) **EP 0 601 556 B1**

(12) **FASCICULE DE BREVET EUROPEEN**

(45) Date de publication et mention
de la délivrance du brevet:
**17.07.1996 Bulletin 1996/29**

(51) Int. Cl.⁶: **B60C 23/00**, B60C 23/04

(21) Numéro de dépôt: **93119769.3**

(22) Date de dépôt: **08.12.1993**

(54) **Procédé de contrôle de la pression des pneumatiques d'un véhicule**

Verfahren zur Reifendrucküberwachung für ein Fahrzeug

Method for controlling the tyre pressure on vehicles

(84) Etats contractants désignés:
**DE ES FR GB IT**

(30) Priorité: **11.12.1992 FR 9215059**

(43) Date de publication de la demande:
**15.06.1994 Bulletin 1994/24**

(73) Titulaire: **COMPAGNIE GENERALE DES ETABLISSEMENTS MICHELIN - MICHELIN & CIE F-63040 Clermont-Ferrand Cédex (FR)**

(72) Inventeur: **Battocchio, Claudio**
**F-63200 Riom (FR)**

(74) Mandataire: **Doussaint, Jean-Marie**
**MICHELIN & CIE**
**Service K. Brevets**
**23, Place des Carmes**
**63040 Clermont-Ferrand Cedex (FR)**

(56) Documents cités:
EP-A- 0 344 002          WO-A-93/02877
DE-A- 3 718 471

**Description**

La présente invention a pour objet un procédé de contrôle de la pression des pneumatiques d'un véhicule ; elle s'applique plus particulièrement aux véhicules équipés d'une installation centralisée de gonflage pouvant fonctionner même pendant l'utilisation du véhicule.

On sait qu'une pression de gonflage correcte des pneumatiques est indispensable à leur bon fonctionnement ; or la valeur de cette pression correcte dépend des conditions d'utilisation et notamment la charge et la vitesse du véhicule ainsi que la nature du sol. Il est donc souhaitable de pouvoir modifier la pression des pneumatiques, même en cours de roulage ; on a développé des systèmes capables d'assurer le gonflage ou le dégonflage des pneumatiques à partir d'une source d'air comprimé installée à bord du véhicule: on peut citer les brevets FR-A-884 598, EP-A-0 297 837 et EP-A-0 344 002.

On sait aussi que les pneumatiques peuvent se dégonfler de deux manières: d'une part sous l'effet d'un dégonflement naturel lent dû au fait que l'étanchéité du caoutchouc à l'air ne peut jamais être infinie et d'autre part à cause des dégonflements accidentels dus, par exemple, à une perforation de l'enveloppe ou une déformation de la jante, etc.

En d'autres termes, une baisse de pression peut avoir trois types de causes dont le traitement sera différent: si la baisse est due à un changement de la valeur de consigne, tout est normal ; si la baisse est due au dégonflement naturel ou à une baisse de la pression atmosphérique ou à une chute de la température ambiante, c'est normal mais il faut corriger la pression ; enfin, dans le cas d'un dégonflement accidentel, la situation est anormale et doit déclencher une alarme.

Or l'expérience montre que, pour chaque type de pneumatique, on peut établir une loi de dégonflement naturel en fonction du temps, et on a observé que cette loi ne dépend pratiquement pas des conditions d'utilisation du véhicule. Pour toute pression de gonflage, il est donc possible de déterminer le temps au bout duquel cette pression aura baissé d'une valeur donnée, par exemple de 0,3 bar. Par conséquent, si l'installation de gonflage centralisée doit intervenir pour relever la pression du pneumatique avant que le délai prédéterminé se soit écoulé, et en dehors d'une variation de la température ambiante ou de la pression atmosphérique qui peuvent facilement être mesurées pour corriger en conséquence la pression nominale de consigne, on peut en déduire qu'il y a un dégonflement anormal du pneumatique.

La présente invention consiste donc à surveiller le délai qui s'écoule entre deux actions de l'installation de gonflage pour relever la pression d'un même pneumatique, à condition que la valeur de consigne pour cette pression reste inchangée pendant toute la durée de ce délai.

Lors d'une crevaison très importante, la pression de gonflage du pneumatique ne peut pas être maintenue si le débit de l'installation de gonflage est plus faible que le débit de fuite du pneumatique ; dans ce cas, le fonctionnement en continu de l'installation de gonflage pour relever la pression de l'un des pneumatiques permet de donner un deuxième niveau d'alerte au conducteur ; ce dernier doit alors réduire la vitesse de son véhicule ou même s'arrêter.

Conformément à l'invention, un procédé de contrôle de la pression des pneumatiques d'un véhicule équipé d'une installation centralisée de gonflage capable d'effectuer des mesures de pression instantanée sur chaque pneumatique, de comparer les valeurs ainsi mesurées à la pression de consigne de chaque pneumatique et d'ajuster la pression si la différence entre la valeur mesurée et la pression de consigne est supérieure à un certain seuil, est caractérisé en ce que ladite installation mémorise la date d'ajustement de la pression pour chaque pneumatique, détermine si l'ajustement est dû à une modification de la valeur de consigne, dans la négative seulement compare la date de l'ajustement à la date de l'ajustement précédent, et déclenche une alarme si le délai entre les deux dates est inférieur à une valeur prédéterminée.

Dans un mode de réalisation préféré de l'invention, le procédé de contrôle de la pression est mis en action au premier démarrage du véhicule de la journée.

Dans une variante avantageuse de l'invention, en cas de fonctionnement permanent de l'ajustement de la pression, une seconde alarme est déclenchée.

On va décrire des exemples de mise en oeuvre de l'invention donnés à titre non limitatif en se référant au dessin annexé sur lequel :

La fig. 1 est un diagramme montrant les variations de pression d'un pneumatique en fonction du temps ;

La fig. 2 est un diagramme similaire sur lequel apparaissent des valeurs de consigne de la pression.

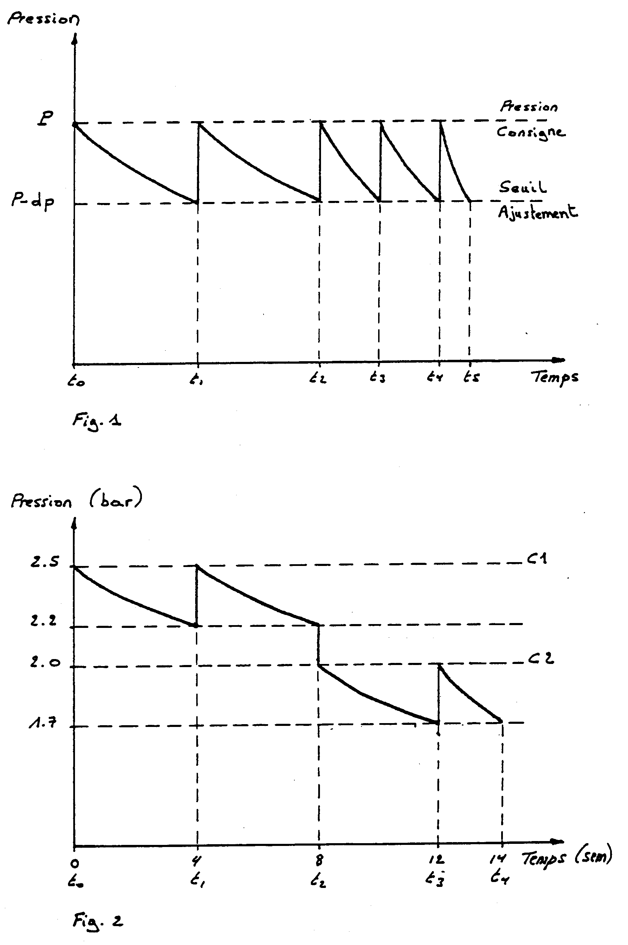

Un pneumatique gonflé à une pression P (Fig. 1), par exemple 2 bar, se dégonfle lentement à cause de la diffusion de l'air à travers sa paroi. Lorsque la pression arrive à une valeur inférieure P-dp prédéterminée, par exemple 1,7 bar, l'installation centralisée de gonflage installée à bord du véhicule regonfle le pneumatique à la pression P = 2 bar (temps t1) ; pour ce faire, l'installation est équipée - de manière connue - d'une source d'air comprimé, de canalisations reliant cette source aux pneumatiques par des joints tournants, d'un sélectionneur permettant d'effectuer des mesures de pression instantanée sur chaque pneumatique et de les connecter à la source d'air comprimé, et enfin d'une centrale de gestion conservant en mémoire les valeurs de pression de consigne de chaque pneumatique, recevant les mesures instantanées, et envoyant les ordres d'ajustement de la pression si la différence entre la pression instantanée mesurée et la pression de consigne dépasse un certain seuil (ici 0,3 bar).

Si l'on mémorise les temps t0, t1, etc. et si, à chaque ajustement de pression, on compare le temps (tn) au temps précédent (tn-1), il est possible de déclencher une alarme lorsque le délai (tn)-(tn-1) est inférieur à une valeur prédéterminée ; dans l'exemple décrit, on a (t1-t0) = (t2-t1) = 3 mois ; (t3-t2) = (t4-t3) = 6 semaines ; et (t5-t4) = 3 semaines . Conformément à l'invention, si l'on a fixé le seuil à 9 semaines, il n'y aura pas d'alarme en t1, ni en t2 car on est en présence de regonflages normaux après des dégonflages naturels : par contre, il y aura alarme en t3 et en t4, puis en t5 si aucune réparation n'a été effectuée.

Dans le cas d'une installation centralisée de gonflage permettant d'imposer des pressions de consigne à chaque pneumatique, il est important de pouvoir détecter les baisses de pression naturelles ou accidentelles parmi les variations de pression imposées volontairement, ou dépendant des conditions atmosphériques ambiantes.

Conformément à l'invention, lorsque la date de l'ajustement de la pression a été mémorisée, on détermine si cet ajustement est dû à une modification de la valeur de consigne, et c'est seulement dans la négative que l'on compare la date de cet ajustement à la date de l'ajustement précédent.

Dans l'exemple décrit (Fig. 2), les valeurs de consigne de la pression C1 et C2 - par exemple 2,5 bar et 2 bar - sont imposées aux dates t0 et t2, et la séquence des opérations est alors la suivante :

- lorsque la pression du pneumatique considéré a diminué jusqu'à la valeur C1-dp (2,2 bar), l'installation recueille la date t1, constate qu'il n'y a pas eu de changement de consigne (C1), effectue la différence t1-t0 (3 mois) et la compare au seuil d'alerte (9 semaines) ; il n'y a pas d'alerte puisque la situation est normale : il y a eu dégonflement naturel et l'installation y remédie en regonflant de C1-dp à C1.

- lorsque la pression a diminué de nouveau et franchi la valeur C1-dp, l'installation recueille la date t2, constate qu'il y a eu changement de consigne (C1/C2) et n'effectue donc pas la différence t2-t1 ;

- lorsque la pression a diminué encore jusqu'à la valeur C2-dp (1,9 bar), l'installation recueille la date t3, constate qu'il n'y a pas eu de changement de consigne (C2), effectue la différence t3-t2 (3 mois) et la compare au seuil d'alerte (9 semaines ) ; il n'y a pas d'alarme car ici, encore, la situation est normale : regonflage après un dégonflement naturel ;

- lorsque la pression diminue enfin jusqu'à la valeur C2-dp, à la date t4, sans changement de consigne (C2), la différence t4-t3 (6 semaines) est inférieure au seuil (9 semaines), ce qui est anormal, il y a donc alerte.

Il sera souvent avantageux de déclencher automatiquement le procédé de contrôle de la pression, objet de l'invention, au moment du premier démarrage du véhicule de la journée de manière à tenir compte du dégonflement des pneumatiques pendant le temps d'inutilisation du véhicule.

Dans le cas d'une crevaison très importante, le délai entre deux ajustements de pression est très bref et l'alarme va se répéter à un rythme élevé ; il peut même arriver que le débit de fuite de l'air du pneumatique endommagé soit supérieur au débit maximal de l'installation centralisée de gonflage, et alors la pression dans le pneumatique va diminuer constamment ; mais même dans ce cas, il est souhaitable de laisser fonctionner en permanence la compensation de pression, car en général elle suffira pour maintenir une pression faible, par exemple quelques dixièmes de bars, mais suffisante pour rouler à une vitesse très réduite sur une courte distance et gagner une zone où le stationnement du véhicule ne présente plus de danger. Dans ce cas, une seconde alarme est déclenchée.

## Revendications

1. Procédé de contrôle de la pression des pneumatiques d'un véhicule équipé d'une installation centralisée de gonflage capable d'effectuer des mesures de pression instantanée sur chaque pneumatique, de comparer les valeurs ainsi mesurées à la pression de consigne de chaque pneumatique et d'ajuster la pression si la différence entre la valeur mesurée et la pression de consigne est supérieure à un certain seuil, caractérisé en ce que ladite installation mémorise la date d'ajustement de la pression pour chaque pneumatique, détermine si l'ajustement est dû à une modification de la valeur de consigne, dans la négative seulement compare la date de l'ajustement à la date de l' ajustement précédent, et déclenche une alarme si le délai entre les deux dates est inférieur à une valeur prédéterminée.

2. Procédé de contrôle de la pression des pneumatiques d'un véhicule selon la revendication 1, caractérisé en ce que le procédé est mis en action au premier démarrage du véhicule de la journée.

3. Procédé de contrôle de la pression des pneumatiques d'un véhicule selon la revendication 1, caractérisé en ce que, en cas de fonctionnement permanent de l'ajustement de la pression, une seconde alarme est déclenchée.

## Claims

1. A method for monitoring the pressure of the tyres of a vehicle equipped with a centralised inflation installation which is capable of effecting measurements of instantaneous pressure on each tyre, comparing the values thus measured with the set pressure of each tyre and adjusting the pressure if the difference between the value measured and the set pressure is greater than a certain threshold, characterised in that said installation memorises the date of adjustment of pressure for each tyre, determines whether the adjustment is due to a change in the set value, only in the negative compares the date of adjustment with the date of the preceding adjustment, and triggers an alarm if the time between the two dates is less than a predetermined value.

2. A method for monitoring the pressure of the tyres of a vehicle according to Claim 1, characterised in that the method is activated when the vehicle is first started up during the day.

3. A method for monitoring the pressure of the tyres of a vehicle according to Claim 1, characterised in that, in the event of permanent operation of the adjustment of the pressure, a second alarm is triggered.

**Patentansprüche**

1. Verfahren zur Reifendrucküberwachung für ein Fahrzeug. das mit einer zentralen Aufpumpeinrichtung ausgestattet ist, die imstande ist, Messungen des augenblicklichen Reifendrucks an jedem Reifen zu bewirken, die so gemessenen Drücke mit dem Solldruck eines jeden Reifens zu vorgleichen und den Druck nachzustellen, wenn die Differenz zwischen dem gemessenen Druck und dem Solldruck größer ist als eine bestimmte Schwelle, dadurch gekennzeichnet, daß die genannte Einrichtung den Zeitpunkt der Nachstellung des Drucks für jeden Reifen speichert, bestimmt, ob die Nachstellung infolge einer Änderung des Sollwertes erfolgt, wenn dies nicht der Fall ist, lediglich den Zeitpunkt der Nachstellung mit dem Zeitpunkt der vorausgehenden Nachstellung vergleicht und einen Alarm auslöst, wenn der Zeitraum zwischen den beiden Zeitpunkten kleiner ist als ein vorbestimmter Wert.

2. Verfahren zur Reifendrucküberwachung für ein Fahrzeug, nach Anspruch 1, dadurch gekennzeichnet, daß das Verfahren beim ersten Fahrzeugstart der Fahrt in Tätigkeit gesetzt wird.

3. Verfahren zur Reifendrucküberwachung für ein Fahrzeug, nach Anspruch 1, dadurch gekennzeichnet, daß im Fall ständigen Betriebes der Nachstellung des Drucks ein zweiter Alarm ausgelöst wird.

Fig. 1

Fig. 2